# EUROPÄISCHE PATENTSCHRIFT

(11) **EP 1 340 048 B1**
(45) Veröffentlichungstag und Bekanntmachung des Hinweises auf die Patenterteilung: **27.02.2008**
(21) Anmeldenummer: 01982317.8
(22) Anmeldetag: 19.09.2001
(51) Int. Cl.: G01D 5/347, B23Q 17/22

(54) **VERFAHREN ZUR MONTAGE EINES LÄNGENMESSGERÄTES UND ENTSPRECHENDES LÄNGENMESSGERÄT**
METHOD FOR MOUNTING A LENGTH MEASURING DEVICE AND CORRESPONDING LENGTH MEASURING DEVICE
PROCEDE POUR LE MONTAGE D'UN APPAREIL DE MESURE DE LONGUEUR ET APPAREIL DE MESURE DE LONGUEUR CORRESPONDANT

(30) Priorität: 29.11.2000 DE 10059308
(43) Veröffentlichungstag der Anmeldung: 03.09.2003
(73) Patentinhaber: Dr. Johannes Heidenhain GmbH, 83292 Traunreut (DE)
(72) Erfinder: TONDORF, Sebastian, 83329 Waging am See (DE)
(86) Internationale Anmeldenummer: PCT/EP2001/010799
(87) Internationale Veröffentlichungsnummer: WO 2002/044654

(56) Entgegenhaltungen:
- EP-A- 1 041 363
- US-A- 4 569 137
- US-A- 4 843 729
- US-A- 4 909 683
- US-A- 5 016 359

## Beschreibung

Die Erfindung betrifft ein Verfahren zur Montage eines Längenmessgerätes, sowie das entsprechende Längenmessgerät selbst.

Derartige Längenmessgeräte dienen beispielsweise als lineare Wegmessgeräte in der Automatisierungstechnik oder für Prüfeinrichtungen. In sehr vielen Fällen kommen Längenmessgeräte auch an Werkzeugmaschinen zum Einsatz. Dort muss die Lage des Schlittens relativ zum Maschinenbett mit großer Genauigkeit gemessen werden. Zu diesem Zweck wird z. B. das die Maßverkörperung enthaltende Gehäuse fest mit dem Maschinenbett verschraubt und die Abtasteinheit des Längenmessgerätes mit dem beweglichen Schlitten der Werkzeugmaschine verbunden.

Häufig werden die Längenmessgeräte als vormontierte Einheiten ausgeliefert, das heißt, dass sich der Maßstab und die längs der Messrichtung bewegliche Abtasteinheit zusammen in einem Gehäuse befinden. Längenmessgeräte in dieser Bauweise werden als geschlossene bzw. gekapselte Längenmessgeräte bezeichnet. Es gibt aber auch sog. offene Längenmessgeräte, bei denen die Abtasteinheit und der Maßstab getrennt ausgeliefert werden.

In beiden Fällen muss das Gehäuse bzw. der Maßstab mit möglichst genauer Parallelität zur Messrichtung auf dem Träger, z. B. an einer Werkzeugmaschine, ausgerichtet und befestigt werden.

Im Folgenden ist mit Längenmessgerät sowohl ein geschlossenes als auch ein offenes Längenmessgerät gemeint. Mit der Erfindung kann somit entweder nur ein Maßstab, oder ein Maßstab mit einer Abtasteinheit, oder ein Maßstab in einem Gehäuse und einer darin untergebrachten Abtasteinheit ausgerichtet und montiert werden.

Durch die ständige Verbesserung der Messgenauigkeit derartiger Längenmessgeräte, wird eine entsprechend angepasste Montagegenauigkeit bezüglich deren Ausrichtung mit der herkömmlichen Technik immer aufwendiger. Messgenauigkeiten von ± 5µm oder weniger sind bei derartigen Längenmessgeräten heutzutage durchaus üblich. Der Zeitaufwand für die entsprechend exakte Justierung der Geräte während der Montagearbeiten, z. B. an Werkzeugmaschinen, ist daher relativ hoch. Darüber hinaus ist der Montage- bzw. Justiervorgang selbst, insbesondere bei längeren Längenmesseräten, für einen einzelnen Monteur sehr diffizil.

Bei der DE 19914311 A1 wird ein Verfahren und eine Vorrichtung beschrieben, die zur Montage eines Maßstabes oder eines Maßstabträgers auf einem entsprechendem Maschinenteil dienen soll. Damit ein ungewollter Klebekontakt vor Abschluss der Ausrichtung des Maßstabes vermieden wird, wurden in dieser Schrift Abstandhalter vorgeschlagen, so dass der Maßstab endgültig ausgerichtet werden kann, bevor er in Berührung mit seiner Unterlage kommt.

In DE 3715908 C2 wird ein flexibler Maßstab mit Magnethaltem oder Saugnäpfen an einem zu vermessenden Körper befestigt. Diese relativ leicht zu lösende Befestigung wird auch während des Messvorganges selbst verwendet. Bei dieser Erfindung ist es nachteilig, dass auf diese Weise keine dauerhaft präzise Fixierung des Maßstabes möglich ist.

Das gleiche gilt für die Offenlegungsschrift EP 0922927 A2, bei der für den Messvorgang eine magnetische Befestigung an dem zu vermessenden Körper vorgesehen ist. Auch dort wird der Längenmaßstab nicht dauerhaft in Kontakt mit dem Messkörper gebracht und es sind relativ geringe Ansprüche an die Messgenauigkeit gegeben.

Der Erfindung liegt die Aufgabe zugrunde, ein Verfahren zur Montage eines Längenmessgerätes anzugeben, mit dem eine einfache und genaue Ausrichtung des Längenmessgerätes bzw. des Maßstabes auf dessen Träger möglich wird. Weiterhin soll ein Längenmessgerät angegeben werden, das sich durch eine leichte Handhabung und universellen Einsatz auszeichnet.

Die Aufgabe wird durch ein Verfahren gemäß Anspruch 1 und einer Vorrichtung gemäß Anspruch 6 gelöst.

Vorteilhafte Ausbildungen sind in den abhängigen Ansprüchen angegeben.

Zur Erleichterung der Montage werden so genannte Montageelemente verwendet, die eine Anziehungskraft zwischen dem Längenmessgerät und dem Träger, beispielsweise das Maschinenbett einer Werkzeugmaschine, ausüben. Für den Fall, dass die besagte Trägerfläche senkrecht angeordnet ist, ergibt sich eine Haftreibungskraft, die dem Produkt aus Anziehungskraft und dem entsprechenden Reibungskoeffizienten entspricht. Bei schrägen oder waagrechten Flächen muss beachtet werden, dass neben der Gesamtanziehungskraft auch die Gewichtskraft entsprechend der gegebenen Trägerflächenneigung mit positivem oder negativem Vorzeichen zur Bestimmung der Summennormalkraft berücksichtigt werden muss. Erfindungsgemäß wird die Summe der Anziehungskräfte aller Montageelemente so bemessen, dass einerseits das Längenmessgerät in der Einbaulage an der Oberfläche des Trägers haftet, andererseits noch eine Verschiebbarkeit des Gerätes zum Zwecke der Justierung möglich ist. Das heißt, dass das Längenmessgerät möglichst mit der Hand auf der Trägeroberfläche verschoben und ausgerichtet werden kann.

Danach ist es für den dauerhaften Gebrauch des Gesamtsystems unabdingbar, dass das Längenmessgerät, z. B. durch Schraubverbindungen, fest mit dem Träger verbunden wird. In diesem Zustand kann das Gerät nicht ungewollt bzw. nicht ohne Beschädigung dejustiert werden.

Als Montageelemente eignen sich insbesondere Magnete. Die Verwendung von Permanentmagneten ist vorteilhaft, weil hier im Vergleich zu Elektromagneten auf die elektrische Hilfsenergie verzichtet werden kann. Sofern eine Ausführungsvariante verwendet wird, die keine Entfernung der Montagemagnete nach erfolgter Montage vorsieht, kann auch die eletctromagnetische Lösung von Vorteil sein, weil hier dann während des Betriebes des Längenmessgerätes keine Magnetkräfte vorhanden sind, die -z. B. bei Werkzeugmaschinen- eine unerwünschte Anziehung von Metallspänen auslösen könnten. Aus demselben Grund ist in einer Ausführungsvariante der Erfindung eine Anordnung der Permanentmagnete vorgesehen, bei der die Magnete bis auf deren zum Träger zugewandten Seite vollständig von einem Stahlgehäuse des Längenmessgerätes umgeben sind. Durch den magnetischen Kurzschluss zwischen Träger und Magneten wird die Größe des Feldes nach außen hin minimiert.

Als eine weitere Ausgestaltung der Erfindung wird die Verwendung von Saugnäpfen als Montageelemente zur vorläufigen Befestigung des Längenmessgerätes an dem Träger angegeben. Diese Saugnäpfe können entweder nur durch das Anpressen des Saugnapfes oder aber auch aktiv z. B. durch entsprechende Spannvorrichtungen oder unterstützt durch Druckluft zur Wirkung gebracht werden.

Bei kürzeren Längenmessgeräten befinden sich die Montageelemente vorzugsweise an den beiden Endbereichen der Längenmessgeräte. Es kann aber gerade bei langen Längenmessgeräten von Vorteil sein, wenn mehrere Montageelemente über die Gesamtlänge des Längenmessgerätes in Messrichtung voneinander beabstandet angeordnet sind.

Ausführungsbeispiele der Erfindung werden anhand der Zeichnungen näher erläutert.

Es zeigt
- Figur 1a - 1c:: schematisch die jeweiligen Verfahrensschritte zur Montage des Längenmessgerätes
- Figur 2a, 2b:: einen Querschnitt und eine Teildraufsicht eines Längenmessgeräte-Endstückes mit Permanentmagneteinheiten
- Figur 3a, 3b:: Einen Querschnitt und eine Teildraufsicht eines Längenmessgeräte-Endstückes mit entfernbaren Permanentmagneteinheiten
- Figur 4a, 4b:: Einen Querschnitt und eine Teildraufsicht eines Längenmessgeräte-Endstückes mit Magneten im Maschinenbett
- Figur 5a, 5b:: Einen Querschnitt und eine Teildraufsicht eines Längenmessgeräte-Endstückes mit aufgestecktem Permanentmagnet
- Figur 6a, 6b:: Einen Querschnitt und eine Teildraufsicht eines Längenmessgeräte-Endstückes mit eingestecktem magnetischem Stift
- Figur 7a, 7b:: Einen Querschnitt und eine Teildraufsicht eines Längenmessgeräte-Endstückes mit Saugnäpfen

In den Figuren sind die Teile, die zu einer Baugruppe gehören oder die gleiche Funktion aufweisen durch identische erste Ziffern des Bezugszeichens zusammengefasst.

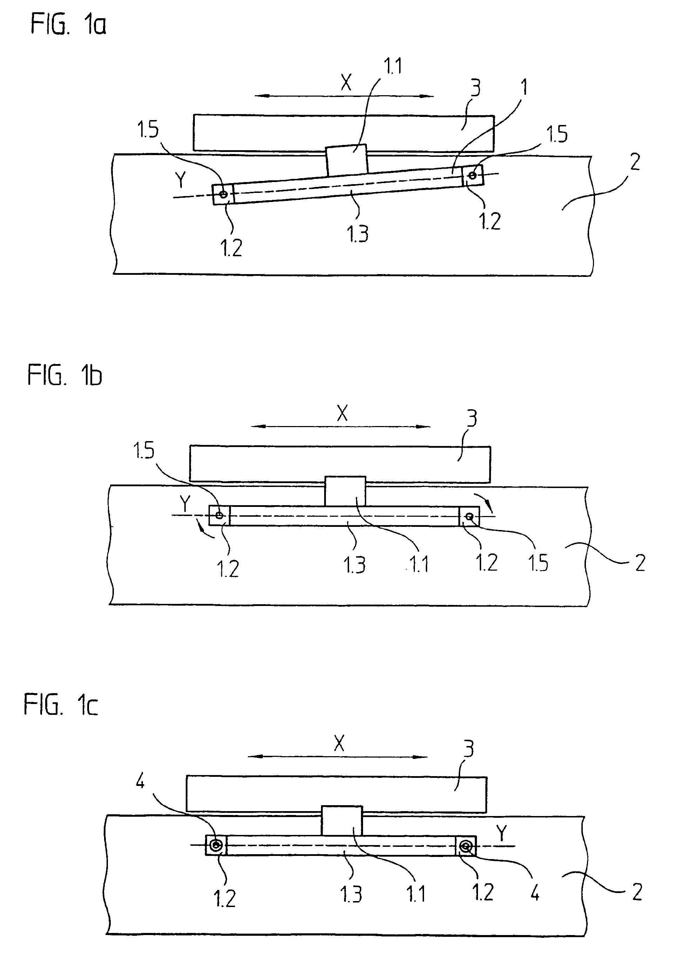

Die Figuren 1a bis 1c sollen im Wesentlichen dazu dienen den Verfahrensablauf zu erläutern. Das Längenmessgerät 1, bestehend aus der Abtasteinheit 1.1, den Endstücken 1.2 und dem gekapseltem Längenmaßstab 1.3, soll an den Träger, in diesem Fall an das Maschinenbett 2 einer Werkzeugmaschine montiert werden. Dabei muss darauf geachtet werden, dass die Ausrichtung Y des Längenmessgerätes 1 möglichst parallel zur Soll-Richtung X ist. Die Soll-Richtung X entspricht der Führungsrichtung des verfahrbaren Schlittens 3 der Werkzeugmaschine.

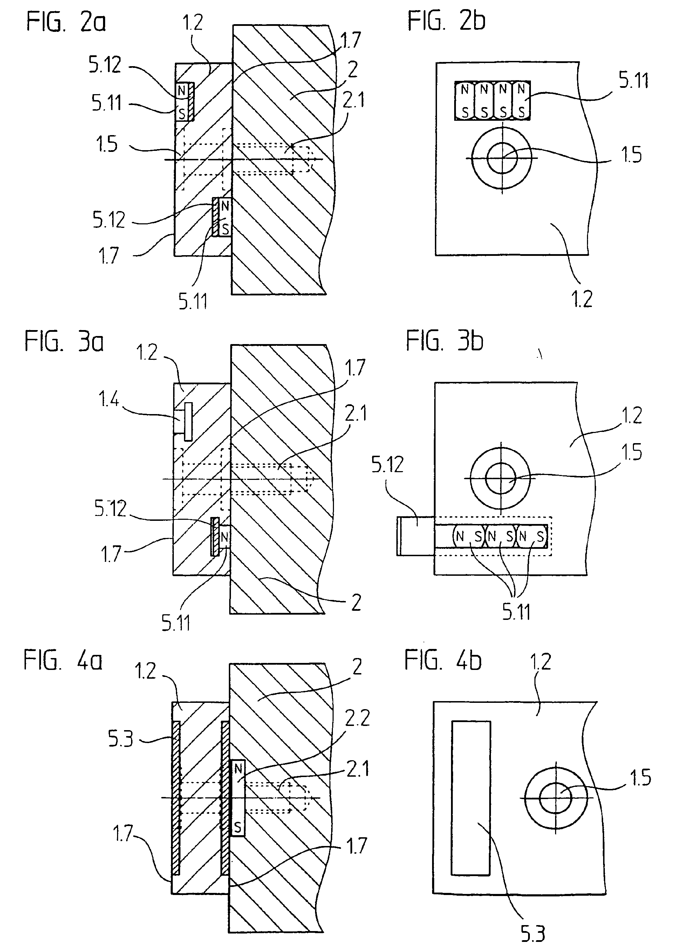

Figur 1 a zeigt die Lage des Längenmessgerätes 1 im ersten Montageschritt. Zur Verdeutlichung der Situation ist die Abweichung der tatsächlichen Ausrichtung Y von der optimalen Soll-Richtung X übertrieben dargestellt. In diesem ersten Montageschritt wird das Längenmessgerät 1 ohne genaue Messmittel in erster Näherung parallel zu X an der senkrechten ebenen Fläche des Maschinenbettes 2 in Haftreibung gebracht. Nach dieser Montagephase haftet das Längenmessgerät 1 ohne manuelle Unterstützung am Maschinenbett 2. Sofern das Spiel zwischen dem Außengewinde der Schrauben 4 und dem Innendurchmesser der Bohrung 1.5 groß genug ist, können schon im ersten Montageschritt die Schrauben 4 durch die Bohrungen 1.5 lose eingedreht werden. Mittel mit denen die erforderliche Haftreibung erzielt wird, werden später anhand der Figuren 2a bis 8b beschrieben.

Im zweiten Montageschritt, dargestellt in Figur 1b, kann dann mühelos die exakte Ausrichtung des Längenmessgerätes 1 mit den erforderlichen Messmitteln vorgenommen werden. Dadurch, dass das Längenmessgerät 1 ohne Zutun des Monteurs am Maschinebett 2 haftet, und dennoch verhältnismäßig leicht manuell verschiebbar ist, ist eine rasche und sehr genaue Justierung möglich. Bei der Ausrichtung treten keine unerwünschten mechanischen Belastungen für das Längenmessgerät 1 auf, weil eine unsachgemäße Montage, z. B. eine Ausrichtung des bereits angeschraubten Längenmessgerätes 1 durch Schlagen, mit diesem Verfahren ausgeschlossen werden kann. Selbstverständlich kann zwischen dem Längenmessgerät 1 und dem Maschinenbett 2 ein Schmier- oder Gleitmittel vorgesehen werden, um die Verschiebbarkeit zu erleichtern, bzw. zur Vermeidung von so genannten Slip-Stick-Effekten. Die Bohrungen 1.5 dienen zur Aufnahme von Schrauben 4 für die endgültige Befestigung nach der exakten Ausrichtung des Längenmessgerätes 1 an dem Maschinenbett 2. Bei der Verschiebung des Längenmessgerätes 1 muss auch darauf geachtet werden, dass die Bohrungen 1.5 im Längenmessgerät 1 die entsprechenden Bohrungen mit Innengewinde 2.1 im Maschinenbett 2 überdecken. Die Bohrungen 1.5 weisen in der Regel einen etwas größeren Innendurchmesser als die Durchmesser der Außengewinde der dazugehörigen Schrauben 4 auf. Auf diese Weise ist genug Spiel vorhanden, um eine Ausrichtung zu ermöglichen, ohne dass bei der Montage gebohrt werden muss.

In der Figur 1c ist der letzte Montageschritt dargestellt. Nachdem die Justierung abgeschlossen ist, z. B bei einer Abweichung der Ist-Richtung Y von der Soll-Richtung X kleiner 0,1 Winkelgrad, wird das Längenmessgerät 1 fest und unverrückbar an dem Maschinenbett 2 durch Schrauben 4 fixiert. In diesem Zustand kann die Abtasteinheit 1.1 nahezu parallel zur Soll-Richtung X, also zur Fahrtrichtung des Schlittens 3, bewegt werden.

In den Figuren 2 bis 8 ist jeweils ein Endstück 1.2 eines Gehäuses des Längenmessgerätes 1 dargestellt. Diese Endstücke 1.2 sind, wie das übrige Gehäuse, häufig aus Aluminium gefertigt, also aus einem nicht ferromagnetischen Material.

Die Figuren 2a und 2b zeigen eine Anordnung, bei der die Montageelemente Permanentmagnete 5.11 sind. In diesem Fall ist das Maschinenbett 2 aus ferromagnetischem Material, z. B. Stahl. Falls erforderlich, können zur Verstärkung der Anziehungskraft, insbesondere wenn ein Aluminiumgehäuse vorliegt, die Permanentmagneten 5.11 mit einem Rückschlussblech 5.12 hinterlegt werden. Die Magnete können zum Beispiel auf das Rückschlussblech 5.12 aufgeklebt werden, oder es wird die Anziehungskraft der Magnete zum Rückschlussblech 5.12 zur Fixierung genutzt. In diesem Fall kann das Rückschlussblech 5.12 untrennbar durch Klebung mit dem Gehäuse verbunden sein.

Prinzipiell ist es für alle Ausführungsbeispiele vorteilhaft, dass die Montageelemente derart ausgeführt sind, dass diese sich während der Montagearbeiten nicht unkontrolliert vom Längenmessgerät 1 lösen, bzw. abfallen.

Falls Magnete als Montageelemente verwendet werden, sind diese vorzugsweise in das Gehäuse des Längenmessgerätes 1 derart eingelassen, dass deren Oberfläche bündig oder etwas zurückgesetzt zur Oberfläche des Längenmessgerätes 1 ist. Durch diese Bauweise wird erreicht, dass die entsprechenden Flächen des Längenmessgerätes 1 und des Maschinenbettes 2 in der gesamten Montagephase in Kontakt stehen. Damit das Längenmessgerät 1 an beiden möglichen Anbauflächen 1.7 mit dem erfindungsgemäßen Verfahren montiert werden kann, sind die Montageelemente in den Ausführungsbeispielen gemäß Figuren 2 bis 4, sowie 7 und 8 symmetrisch, insbesondere punktsymmetrisch zum Mittelpunkt des Querschnittes des Längenmessgerätes 1 angeordnet bzw. anordbar.

Die Figuren 3a und 3b zeigen eine Variante, bei der das Montageelement als eine entfernbare Permanentmagneteinheit 5.1 mit einem entsprechendem Rückschlussblech 5.12 ausgeführt ist. Damit die Permanentmagnete 5.11 und das Rückschlussblech 5.12 ausreichend gegen herausfallen gesichert sind, sind hier im Endstück 1.2 des Längenmessgerätes 1 hinterschnittene Ausnehmungen 1.4 vorgesehen, die als Führung für das Rückschlussblech 5.12 dienen. Um das Herausziehen der Permanentmagneteinheit 5.1 zu erleichtern, ist das Rückschlussblech 5.12 an einem Ende entsprechend gebogen (In der Teildraufsicht in Fig. 3b ragt das Rückschlussblech 5.12 an einem Ende aus der Zeichenebene). Die entfernte Permanentmagneteinheit 5.1 kann bei einem anderen zu montierendem Längenmessgerät 1 wieder verwendet werden.

Die Figuren 4a und 4b zeigen eine Ausführungsvariante, bei welcher das Maschinenbett 2 aus einem nicht ferromagnetischen Material besteht, wie z.B. Granit oder Polymerbeton. Hier kann in das Maschinenbett 2 ein Permanentmagnet 2.2 eingelassen werden, der dann mit einem ferromagnetischen Einsatz 5.3 des Längenmessgerätes in Wechselwirkung steht. Selbstverständlich können die Einsätze in das Längenmessgerät 1 als Permanentmagneten, ähnlich den Figuren 2 und 3 ausgeführt werden, wenn in dem nicht ferromagnetischen Maschinenbett 2 entsprechende magnetisch anziehende Reaktionsteile, wie z. B. Stahlblechstreifen, vorgesehen sind.

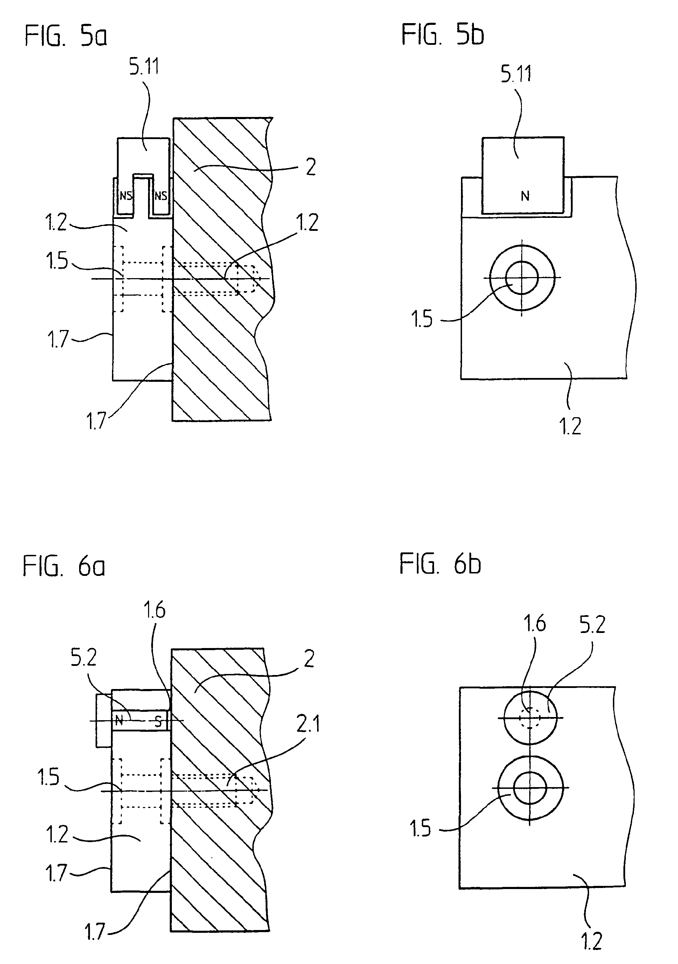

Alternativ zu den bisher gezeigten Ausführungsformen, ist in den Figuren 5a und 5b eine Anordnung dargestellt, bei der jeweils ein hufeisenförmiger Permanentmagnet 5.11 das Endstück 1.2 umgreift. Durch die magnetische Anziehungskraft zwischen dem Maschinenbett 2 und dem Permanentmagnet 5.11, entsteht eine tragende Reibverbindung zwischen dem Permanentmagneten 5.11 und dem Endstück 1.2. Diese Reibverbindung weist eine Tragfähigkeit auf, die so groß ist, dass sich der Reibschluss auch bei den Verschiebebewegungen während des Justiervorganges nicht löst. Nach erfolgter Montage können die Permanentmagnete 5.11 auf einfache Weise wieder abgezogen werden.

In den Figuren 6a und 6b ist eine Variante dargestellt, bei der ein magnetischer Stift 5.2 in eine Hilfsbohrung 1.6 des Endstückes 1.2 des Längenmessgerätes 1 gesteckt werden kann. Diese Variante zeichnet sich durch ihren einfachen Aufbau aus. Im Gegensatz zur Variante in Fig. 5 ist hier eine formschlüssige Kraftübertragung zwischen Permanentmagnet 5.11 und Endstück 1.2 gegeben. Auch hier kann das Längenmessgerät 1 nach dem erfindungsgemäßen Verfahren an beiden möglichen Anbauflächen 1.7 am Maschinenbett 2 befestigt werden. Der magnetische Stift 5.2 sollte so beschaffen sein, dass er bei den Montagearbeiten nicht herausfallen kann. Vom Gesichtspunkt der Fertigungskosten ist die gezeigte Ausführungsform, bei welcher der Stift 5.2 durch eine entsprechend schwergängige Passung gesichert ist, besonders vorteilhaft.

Alternativ hierzu kann zur axialen Sicherung auch ein Kunststoffelement, welches beim Einführen des Stiftes 5.2 gegen die Wand der Hilfsbohrung 1.6 gedrückt wird oder ein entsprechendes Gewinde vorgesehen werden.

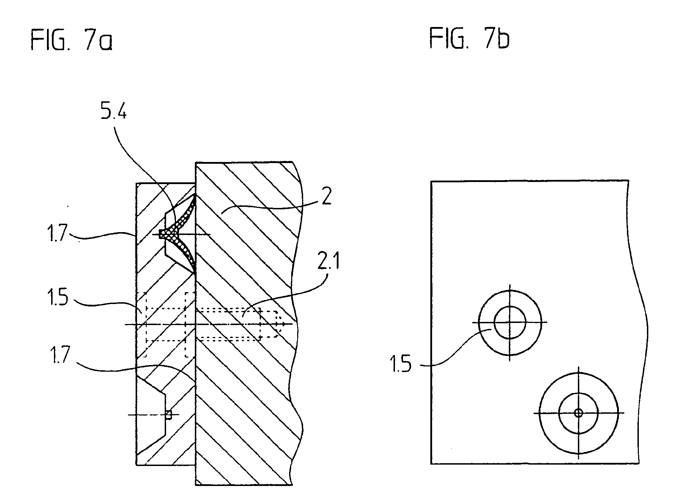

In den Figuren 7a und 7b wird eine Ausführungsvariante dargestellt, bei dem die Haftreibverbindung durch Saugnäpfe 5.4 aus Polymermaterial hervorgerufen wird. Besonders vorteilhaft kann auch hier das Auftragen eines Schmier- oder Gleitmittels sein, um einerseits die Verschiebbarkeit zu erhöhen und andererseits das Eindringen von Luft in den Unterdruckbereich des Saugnapfes 5.4 zu vermeiden.

## Patentansprüche

1. Verfahren zur Montage eines Längenmessgerätes (1) an einen Träger (2), wobei
- das Längenmessgerät (1) in einem ersten Montageschritt in eine Haftreibungsverbindung mit der Trägeroberfläche gebracht wird, wobei zumindest ein Montageelement (5.1, 5.2, 5.3, 5.4, 5.5)
eine magnetische Anziehungskraft oder
eine Anziehungskraft, welche durch einen Unterdruck hervorgerufen wird,
zwischen dem Träger (2) und dem Längenmessgerät (1) bewirkt, und diese Anziehungskraft so bemessen ist, dass die entsprechende Reibkraft eine Verschiebbarkeit des Längenmessgerätes (1) gewährleistet,
- in einem zweiten Montageschritt die Lage und Richtung des Längenmessgerätes (1) justiert wird, so dass dessen Ausrichtung eine, im Sinne des Längenmessergebnisses, ausreichend kleine Abweichung zur Soll-Richtung aufweist,
- in einem dritten Montageschritt das Längenmessgerät (1) nicht verschiebbar mit seinem Träger (2) verbunden wird.

2. Verfahren nach Anspruch 1, **dadurch gekennzeichnet, dass** das Längenmessgerät (1) eine bereits vormontierte Einheit darstellt, welche aus mindestens einem Längenmaßstab (1.3) und mindestens einer Abtasteinheit (1.1) besteht.

3. Verfahren nach Anspruch 1, **dadurch gekennzeichnet, dass** zumindest zwei voneinander beabstandete Montageelemente (5.1, 5.2, 5.3, 5.4, 5.5) am Längenmessgerät (1) angeordnet sind, über die das Längenmessgerät (1) mit seinem Träger (2) verbunden wird.

4. Verfahren nach Anspruch 1, **dadurch gekennzeichnet, dass** in dem dritten Montageschritt das Längenmessgerät (1) mit Hilfe von Schraub- und/oder Nietverbindungen an zumindest zwei Punkten nicht verschiebbar mit seinem Träger (2) verbunden wird.

5. Verfahren nach Anspruch 1, **dadurch gekennzeichnet, dass** in einem vierten Montageschritt sämtliche oder nur eine Teilanzahl der Montageelemente (5.1, 5.2, 5.3, 5.4, 5.5) entfernt werden.

6. Längenmessgerät (1) mit
- mindestens einem Montageelement (5.1, 5.2, 5.3, 5.4, 5.5), welches eine magnetische Anziehungskraft oder
eine Anziehungskraft, welche durch einen Unterdruck hervorgerufen wird, zwischen einem Träger (2) und dem Längenmessgerät (1) bewirkt, wobei
- das Montageelement oder die Montageelemente (5.1, 5.2, 5.3, 5.4, 5.5) so dimensioniert sind, dass die von der Gesamtanziehungskraft abhängige Reibkraft einerseits eine Haftung des Längenmessgerätes (1) am Träger (2), andererseits auch eine Verschiebbarkeit des Längenmessgerätes (1) entlang der Trägeroberfläche während der Montage gewährleistet.

7. Längenmessgerät nach Anspruch 6, **dadurch gekennzeichnet, dass** das Längenmessgerät (1) eine bereits vormontierte Einheit darstellt, welche aus mindestens einem Längenmaßstab (1.3) und mindestens einer Abtasteinheit (1.1) besteht.

8. Längenmessgerät nach Anspruch 6, **dadurch gekennzeichnet, dass** die Montageelemente (5.1, 5.2, 5.3, 5.4, 5.5) so angeordnet oder anordbar sind, dass das Längenmessgerät (1) an zumindest zwei seiner Anbauflächen (1.7) an einem Träger (2) alternativ in eine Haftreibungsverbindung zu bringen ist.

9. Längenmessgerät nach einem der Ansprüche 6 bis 8, **dadurch gekennzeichnet, dass** zumindest zwei Montageelemente (5-1, 5.2, 5.3, 5.4, 5.5) am Längenmessgerät (1) angeordnet sind.

10. Längenmessgerät nach Anspruch 9, **dadurch gekennzeichnet, dass** die Montageelemente (5.1, 5.2, 5.3, 5.4, 5.5) an den beiden Endbereichen (1.2) des Längenmessgerätes (1) angeordnet sind.

11. Längenmessgerät nach einem der Ansprüche 6 bis 10 **dadurch gekennzeichnet, dass** zumindest ein Montageelement (5.1, 5.2, 5.3) eine magnetische Anziehungskraft zwischen dem Träger (2) und dem Längenmessgerät (1) bewirkt.

12. Längenmessgerät nach Anspruch 11, **dadurch gekennzeichnet, dass** zumindest ein Permanentmagnet (5.11) angeordnet ist, um eine magnetische Anziehungskraft zwischen dem Träger (2) und dem Längenmessgerät (1) zu erzeugen.

13. Längenmessgerät nach Anspruch 11, **dadurch gekennzeichnet, dass** zumindest ein schaltbarer Magnet, insbesondere ein Elektromagnet, angeordnet ist um eine magnetische Anziehungskraft zwischen dem Träger (2) und dem Längenmessgerät (1) zu erzeugen.

14. Längenmessgerät nach Anspruch 12 oder 13, **dadurch gekennzeichnet, dass** die Magnete (5.11) an den Flächen, die dem Träger (2) abgewandt sind, mit Rückschlussblechen (5.12) versehen sind.

15. Längenmessgerät nach Anspruch 12 oder 13, **dadurch gekennzeichnet, dass** die Magnete (5.11) im Längenmessgerät (1) mit Hilfe von einer oder mehreren hinterschnittenen Ausnehmungen (1.4), insbesondere einer oder mehrerer Schwalbenschwanzausnehmungen, befestigt sind.

16. Längenmessgerät nach Anspruch 12 oder 13, **dadurch gekennzeichnet, dass** das Längenmessgerät (1) zumindest eine durchgängige Hilfsbohrung (1.6) aufweist, in die zylindrische Magnete (5.2) steckbar sind.

17. Längenmessgerät nach Anspruch 11, **dadurch gekennzeichnet, dass** an dem Längenmessgerät (1) zumindest ein ferromagnetisches Reaktionsteil (5.3) angebracht ist, welches von einem oder mehreren im Träger (2) angeordneten Magneten (2.2) angezogen wird.

18. Längenmessgerät nach Anspruch 6, **dadurch gekennzeichnet, dass** das Längenmessgerät (1) derart ausgebildet ist, dass sämtliche oder nur eine Teilanzahl der Montageelemente (5.1, 5.2, 5.3, 5.4, 5.5) nach erfolgter Montage entfernt werden können.

## Claims

1. Method for mounting a length measuring device (1) on a support (2),
- in a first mounting step, the length measuring device (1) being brought into static frictional connection with the support surface, at least one mounting element (5.1, 5.2, 5.3, 5.4, 5.5) effecting a magnetic attraction force or an attraction force which is caused by low pressure between the support (2) and the length measuring device (1),
and this attraction force being dimensioned such that the corresponding frictional force ensures displaceability of the length measuring device (1),
- in a second mounting step, the position and direction of the length measuring device (1) being adjusted such that the orientation thereof in the direction of the length measurement result has a sufficiently small deviation from the reference direction,
- in a third mounting step, the length measuring device (1) being connected non-displaceably to the support (2) thereof.

2. Method according to claim 1, **characterised in that** the length measuring device (1) represents an already pre-assembled unit which comprises at least one linear scale (1.3) and at least one scanning unit (1.1).

3. Method according to claim 1, **characterised in that** at least two mounting elements (5.1, 5.2, 5.3, 5.4, 5.5) which are at a spacing from each other are disposed on the length measuring device (1), via which the length measuring device (1) is connected to the support (2) thereof.

4. Method according to claim 1, **characterised in that**, in the third mounting step, the length measuring device (1) is connected non-displaceably at at least two points to the carrier (2) thereof with the help of screw- and/or rivet connections.

5. Method according to claim 1, **characterised in that**, in a fourth mounting step, the total or only a partial number of the mounting elements (5.1, 5.2, 5.3, 5.4, 5.5) are removed.

6. Length measuring device (1) having
- at least one mounting element (5.1, 5.2, 5.3, 5.4, 5.5) which exerts a magnetic attraction force or
an attraction force which is caused by low pressure between a support (2) and the length measuring device (1),
- the mounting element or the mounting elements (5.1, 5.2, 5.3, 5.4, 5.5) being dimensioned such that the frictional force, which is a function of the total attraction force, ensures on the one hand adhesion of the length measuring device (1) to the support (2) and, on the other hand, also ensures displaceablity of the length measuring device (1) along the support surface during mounting.

7. Length measuring device according to claim 6, **characterised in that** the length measuring device (1) is an already pre-assembled unit which comprises at least one linear scale (1.3) and at least one scanning unit (1.1).

8. Length measuring device according to claim 6, **characterised in that** the mounting elements (5.1, 5.2, 5.3, 5.4, 5.5) are or can be disposed such that the length measuring device (1) can alternatively be brought at at least two attachment surfaces (1.7) thereof into static frictional connection to a support (2).

9. Length measuring device according to one of the claims 6 to 8, **characterised in that** at least two mounting elements (5.1, 5.2, 5.3, 5.4, 5.5) are disposed on the length measuring device (1)

10. Length measuring device according to claim 9, **characterised in that** the mounting elements (5.1, 5.2, 5.3, 5.4, 5.5) are disposed on the two end regions (1.2) of the length measuring device (1).

11. Length measuring device according to one of the claims 6 to 10, **characterised in that** at least one mounting element (5.1, 5.2, 5.3) exerts a magnetic attraction force between the support (2) and the length measuring device (1).

12. Length measuring device according to claim 11, **characterised in that** at least one permanent magnet (5.11) is disposed in order to generate a magnetic attraction force between the support (2) and the length measuring device (1).

13. Length measuring device according to claim 11, **characterised in that** at least one switchable magnet, in particular an electromagnet, is disposed in order to generate a magnetic attraction force between the support (2) and the length measuring device (1).

14. Length measuring device according to claim 12 or 13, **characterised in that**, on the surfaces which are orientated away from the support (2), the magnets (5.11) are provided with rear closure plates (5.12).

15. Length measuring device according to claim 12 or 13, **characterised in that** the magnets (5.11) are fixed in the length measuring device (1) with the help of one or more undercut recesses (1.4), in particular one or more dovetailed recesses.

16. Length measuring device according to claim 12 or 13, **characterised in that** the length measuring device (1) has at least one penetrating auxiliary bore (1.6) into which cylindrical magnets (5.2) can be inserted.

17. Length measuring device according to claim 11, **characterised in that** at least one ferromagnetic reaction element (5.3) is attached to the length measuring device (1) and is attracted by one or more magnets (2.2) disposed in the support (2).

18. Length measuring device according to claim 6, **characterised in that** the length measuring device (1) is configured in such a manner that the total or only a partial number of the mounting elements (5.1, 5.2, 5.3, 5.4, 5.5) can be removed after mounting has been effected.

## Revendications

1. Procédé pour le montage d'un appareil de mesure de longueur (1) sur un support (2), selon lequel
- dans une première étape de montage, l'appareil de mesure de longueur (1) est mis en liaison par frottement statique avec la surface du support, et entre le support (2) et l'appareil de mesure de longueur s'exerce une force d'attraction magnétique produite par au moins un élément de montage (5.1, 5.2, 5.3, 5.4, 5.5), ou un force d'attraction produite par une dépression, cette force d'attraction étant dimensionnée de manière que la force du frottement statique correspondante permet à l'appareil de mesure de longueur (1) de coulisser,
- dans une deuxième étape de montage la position et l'orientation de l'appareil de mesure de longueur (1) sont ajustées de sorte que cette orientation présente, au sens du résultat de la mesure de longueur, un écart suffisamment petit par rapport à l'orientation de consigne,
- dans une troisième étape de montage, l'appareil de mesure de longueur (1) est relié à son support (2) de manière à ne pas pouvoir coulisser.

2. Procédé selon la revendication 1, **caractérisé en ce que** l'appareil de mesure de longueur (1) est une unité déjà préassemblée, composée d'au moins une règle de mesure de longueur (1.3) et d'au moins une unité d'exploration (1.1).

3. Procédé selon la revendication 1, **caractérisé en ce que** sur l'appareil de mesure de longueur (1) sont disposés au moins deux éléments de montage espacés l'un de l'autre (5.1, 5.2, 5.3, 5.4, 5.5), par lesquels cet appareil est relié à son support (2).

4. Procédé selon la revendication 1, **caractérisé en ce qu'**à la troisième étape de montage, l'appareil de mesure de longueur (1) est fixé à son support (2), à l'aide de liaisons par vis ou par rivets, en au moins deux points de manière à ne pas pouvoir coulisser.

5. Procédé selon la revendication 1, **caractérisé en ce que** dans une quatrième étape de montage la totalité ou seulement une partie des éléments de montage (5.1, 5.2, 5.3, 5.4, 5.5) est retirée.

6. Appareil de mesure de longueur (1) dans lequel
- entre un support (2) et l'appareil de mesure de longueur (1) agit une force magnétique d'attraction produite par au moins un élément de montage (5.1, 5.2, 5.3, 5.4, 5.5) ou une force d'attraction produite par une dépression,
- le ou les éléments de montage (5.1, 5.2, 5.3, 5.4, 5.5) sont dimensionnés de manière que la force de frottement qui dépend de la force d'attraction globale garantit d'une part que l'appareil de mesure de longueur (1) adhère au support (2) tout en pouvant d'autre part coulisser le long de la surface du support pendant le montage.

7. Appareil de mesure de longueur selon la revendication 6, **caractérisé en ce que** cet appareil (1) est constitué par une unité déjà préassemblée, comprenant au moins une règle de mesure de longueur (1.2) et au moins une unité d'exploration (1.1).

8. Appareil de mesure de longueur selon la revendication 6, **caractérisé en ce que** les éléments de montage (5.1, 5.2, 5.3, 5.4, 5.5) sont ou peuvent être disposés de manière que l'appareil de mesure de longueur (1), au moins le long de deux de ses portées de montage (1.7) sur le support (2) peut être alternativement amené en liaison par frottement statique.

9. Appareil de mesure de longueur selon une des revendications 6 à 8, **caractérisé en ce qu'**au moins deux éléments de montage (5.1, 5.2, 5.3, 5.4, 5.5) sont disposés sur l'appareil de mesure de longueur (1).

10. Appareil de mesure de longueur selon la revendication 9, **caractérisé en ce que** les éléments de montage (5.1, 5.2, 5.3, 5.4, 5.5) sont disposés sur les deux zones d'extrémité (1.2) de l'appareil de mesure de longueur (1).

11. Appareil de mesure de longueur selon une des revendications 6 à 10, **caractérisé en ce qu'**au moins un élément de montage (5.1, 5.2, 5.3, 5.4, 5.5) produit une force magnétique d'attraction entre le support (2) et l'appareil de mesure de longueur (1).

12. Appareil de mesure de longueur selon la revendication 11, **caractérisé en ce qu'**au moins un aimant permanent (5.11) est disposé de manière à produire une force d'attraction entre le support (2) et l'appareil de mesure de longueur (1).

13. Appareil de mesure de longueur selon la revendication 11, **caractérisé en ce qu'**au moins un aimant commutable, notamment un électroaimant est disposé de manière à produire une force d'attraction entre le support (2) et l'appareil de mesure de longueur (1).

14. Appareil de mesure de longueur selon la revendication 12 ou 13, **caractérisé en ce que** les aimants (5.11) sont équipés, sur leurs portées tournant le dos au support (2), de tôles de reflux.

15. Appareil de mesure de longueur selon la revendication 12 ou 13, **caractérisé en ce que** les aimants (5.11) dans l'appareil de mesure de longueur (1), sont fixés à l'aide d'un ou plusieurs évidements (1.4) en contredépouille, notamment un ou plusieurs évidements en queue d'arronde.

16. Appareil de mesure de longueur selon la revendication 12 ou 13, **caractérisé en ce que** l'appareil de mesure de longueur (1) présente au moins un alésage auxiliaire (1.6) continu, dans lequel peuvent être emmanchés des aimants cylindriques (5.2).

17. Appareil de mesure de longueur selon la revendication 11, **caractérisé en ce que** sur l'appareil de mesure de longueur (1) est montée au moins une partie de réaction (5.3) ferromagnétique, qui est attirée par un ou plusieurs aimants (2.2) disposés sur le support (2).

18. Appareil de mesure de longueur selon la revendication 6, **caractérisé en ce que** l'appareil de mesure de longueur (1) est constitué de manière que la totalité ou une partie seulement des éléments de montage (5.1, 5.2, 5.3, 5.4, 5.5) peut être retirée une fois le montage effectué.
